# EUROPÄISCHE PATENTSCHRIFT

(11) **EP 1 122 395 B1**
(45) Veröffentlichungstag und Bekanntmachung des Hinweises auf die Patenterteilung: **21.12.2005**
(21) Anmeldenummer: 01102007.0
(22) Anmeldetag: 30.01.2001
(51) Int. Cl.: E06B 9/01, E04F 13/08, F16B 7/04

(54) **Verbindungsvorrichtung für ein Fassadenelement**
Connecting device for a façade element
Dispositif de connexion pour un elément de façade

(30) Priorität: 02.02.2000 DE 20001779 U
(43) Veröffentlichungstag der Anmeldung: 08.08.2001
(73) Patentinhaber: Houben, Dietmar, 42329 Wuppertal (DE)
(72) Erfinder: Houben, Dietmar, 42329 Wuppertal (DE); Reiche, Eberhard, 58644 Iserlohn (DE)
(74) Vertreter: Selting, Günther

(56) Entgegenhaltungen:
- EP-A- 0 257 000
- DE-A- 3 223 646
- GB-A- 686 249
- GB-A- 2 106 212

## Beschreibung

Die Erfindung bezieht sich auf eine Gebäudefassade mit zwei an einem Tragelement angebrachten Fassadenelementen.

Zur Verkleidung von Gebäudefassaden werden Fassadenelemente verwendet, die an der Gebäudeaußenseite an der Gebäudewand oder vor einem Gebäudefenster angebracht sind. Die Anbringung des Fassadenelementes erfolgt häufig und insbesondere vor Fenstern nicht vollflächig, sondern das Fassadenelement kann nur punktuell an seinen Seitenrändern an entsprechenden Tragelementen aufgehängt werden. An die Verbindung zwischen dem Fassadenelement und dem Tragelement werden hohe Anforderungen an Festigkeit, Langlebigkeit und einfache Montierbarkeit gestellt.

Aufgabe der Erfindung ist es, eine Gebäudefassade mit einer sicheren Anbringung der Fassadenelemente an einem Tragelement des Gebäudes zu schaffen.

Diese Aufgabe wird erfindungsgemäß gelöst mit dem Merkmalen des Anspruchs 1.

Erfindungsgemäß ist ein Spannkörper vorgesehen, der in eine Einstecköffnung des Fassadenelementes und in eine Einstecköffnung des Tragelementes einsteckbar ist, wobei der Spannkörper zwei parallele Stäbe und ein Spreizelement zwischen den beiden Stäben aufweist. Das Spreizelement ist betätigbar, um die beiden Stäbe auseinanderzudrücken und dadurch in den Einstecköffnungen zu verspannen. Bei der Montage des Fassadenelementes an einem Tragelement sind die beiden Stäbe des Spannkörpers zunächst eng aneinanderliegend, so dass der Spannkörper den kleinstmöglichen Querschnitt einnimmt.

Der Spannkörper weist zwei Spreizelemente auf. Die Spreizelemente sind beide jeweils seitlich des mittleren Bereiches der Spannkörperlänge angeordnet, wobei der mittlere Bereich des Spannkörpers in das Tragelement einsteckbar und dort verspannbar ist und die Spreizelemente seitlich des Tragelementes zugänglich bleiben. Bei der Montage wird ein erstes Fassadenelement zunächst derart in Position gebracht, dass seine Einstecköffnung mit der Tragelement-Einstecköffnung fluchtet. Anschließend wird der Spannkörper in beide Einstecköffnungen eingesteckt, so dass der Spannkörper mit seiner Mitte in der Tragelement-Einstecköffnung lagert. Die beiden Spreizelemente sind jeweils seitlich des Gebäude-Tragelementes zugänglich. Anschließend wird das zweite Fassadenelement mit seiner Einstecköffnung auf das verbleibende freie Ende des Spannkörpers aufgeschoben und die beiden Spreizelemente gespannt. Da die Spreizelemente jeweils in dem Zwischenraum zwischen dem GebäudeTragelement und dem jeweiligen Fassadenelement angeordnet sind, sind sie leicht zugänglich.

Durch Betätigung des Spreizelementes werden die beiden parallelen Stäbe des Spannkörpers auseinandergedrückt, so dass der Spannkörper in den Einstecköffnungen gegen die Innenwände gedrückt und auf diese Weise in den Einstecköffnungen verspannt wird. Es wird eine Verbindung zwischen dem Gebäudetragelement und dem Fassadenelement geschaffen, die einfach montierbar ist und eine zuverlässige Anbringung eines Fassadenelementes an einem Gebäudetragelement darstellt.

Die erfindungsgemäße Gebäudefassade weist zwei Fassadenelemente auf, die mit der zuvor beschriebenen Verbindungsvorrichtung an dem Tragelement des Gebäudes befestigt sind.

Gemäß einer bevorzugten Ausgestaltung ist das Spreizelement jeweils eine Gewindeschraube in einer Gewindebohrung des einen Stabes. Der andere Stab weist eine durchgehende Zugriffsbohrung auf, mit der die Gewindebohrung des einen Stabes fluchtet und durch die die Gewindeschraube betätigbar ist. Das Spreizelement ist als Gewindeschraube ausgebildet, die zwischen den beiden Stäben derart angeordnet ist, dass sie beim Herausschrauben aus der Gewindebohrung des einen Stabes mit ihrem Schraubenkopf den anderen Stab von dem einen Stab wegdrückt. Die Zugriffsbohrung in dem anderen Stab ist erforderlich, um den Kopf der Gewindeschraube mit Hilfe eines Schraubendrehers betätigen zu können. Damit ist eine einfache Spreizvorrichtung geschaffen, die fein dosiert betätigt werden kann, nötigenfalls jedoch auch sehr fest angezogen werden kann. Zur Betätigung ist ein Schraubendreher ausreichend, so dass die Spreizvorrichtung auch bei schlechter Zugänglichkeit betätigbar ist.

Gemäß einer bevorzugten Ausgestaltung weist ein Stab zwischen den beiden Spreizelementen eine Gelenkstelle auf. Durch die Gelenkstelle wird der Stab in zwei zueinander bewegliche Stabhälften aufgeteilt. Der Stab ist also nicht über seine gesamte Länge steif, sondern mit einem Gelenk versehen. Die Gelenkachse der Gelenkstelle ist senkrecht zur Kraftachse der Spreizelemente angeordnet. Durch Vorsehen einer Gelenkstelle wird der Stab in zwei Stababschnitte unterteilt, die sich unabhängig voneinander von dem gelenklosen Stab abspreizen lassen. Durch die Gelenkigkeit des Stabes kann sich der Stab an geringfügig voneinander abweichende Innenmaße der Einstecköffnungen der Fassadenelemente und des Tragelementes anpassen. Bei gelenklosen Stäben würde schon bei geringen Abweichungen der Innenmaße der Einstecköffnungen in der Einstecköffnung mit der größten Innenweite keine Klemmung erzeugt. Mit der Gelenkstelle zwischen den beiden Spreizelementen wird also ein Spannkörper realisiert, mit dem seitlich eines Gebäudetragelementes mit einer durchgehenden Einstecköffnung jeweils ein Fassadenelement zuverlässig befestigt werden kann.

Vorzugsweise ist die Gelenkstelle als Biegenut in dem Stab ausgebildet. Die Biegenut kann eine rechteckige Biegenut sein, so dass sich ein Biegebereich bildet und die Gefahr von Materialbrüchen im Bereich der Biegenut vermieden wird.

Gemäß einer bevorzugten Ausgestaltung weist die Zugriffsbohrung eine Ausnehmung zur Aufnahme eines Kopfes der Gewindeschraube auf. Der Gewindeschraubenkopf ist in der Ausnehmung der Zugriffsbohrung versenkbar, so dass die beiden Stäbe bei eingeschraubter Schraube aufeinanderliegen können, obwohl der Schraubenkopf aus dem einen Stab herausragt. Die Ausnehmung zur Aufnahme des Schraubenkopfes bewirkt ferner, dass die beiden Stäbe im in die Einstecköffnungen eingesteckten Zustand unverrückbar zueinander sind.

Gemäß einer bevorzugten Ausgestaltung weist der Spannkörper einen Holezug zum Herausziehen des Spannkörpers aus einer Einstecköffnung bei der Montage auf. Bei der Montage kann es erforderlich sein, den Spannkörper mit seiner gesamten Länge zunächst in eine Einstecköffnung einzuschieben, um ein Fassadenelement anschließend vor dieser Einstecköffnung anzuordnen und den Spannkörper anschließend aus der Tragelementöffnung herauszuziehen und ihn teilweise in die Einstecköffnung des angeordneten Fassadenelementes einzuschieben. Der Holezug dient dazu, den vollständig eingesteckten Spannkörper auf einfache Weise teilweise wieder aus einer Einstecköffnung herauszuziehen.

Gemäß einer bevorzugten Ausgestaltung ist der Holezug durch die Gewindeschraube an dem einen Stab festgeklemmt, wobei der Holezug beim Herausdrehen der Gewindeschraube, d.h. beim Spreizen der beiden Stäbe, gelöst wird. Der Holezug ist also zunächst durch den Schraubenkopf an der vollständig eingeschraubten Schraube an den Stab festgeklemmt und wird gelöst, sobald die Schraube zum Spreizen der beiden Stäbe aus dem einen Gewindestab herausgeschraubt wird.

Vorzugsweise weist der Spannkörper ein lösbares Halteteil auf, das die beiden Stäbe vor und während der Montage lösbar zusammenhält. Das Halteteil sorgt dafür, dass die beiden Stäbe bis zur Montage zusammenbleiben und nicht auseinanderfallen können. Die Montage wird hierdurch vereinfacht. Das Halteteil kann in Form eines um die Stäbe gewickelten Klebebandes, in Form einer leicht lösbaren Verklebung der beiden Stäbe miteinander oder auf andere Weise ausgebildet sein.

Das Fassadenelement weist vorzugsweise eine in Längsrichtung durchgehende Einstecköffnung auf, so dass das Fassadenelement an seinen beiden Längsenden mit der Verbindungsvorrichtung an dem Gebäudetragelement befestigt werden kann.

Gemäß einer bevorzugten Ausgestaltung weisen die Fassadenelemente in ihrer Einstecköffnung eine starre Klemmhülse auf, in die die Verbindungsvorrichtung eingespannt ist. Bei Fassadenelementen, die nicht aus Keramik, Beton, Stahl oder anderen sehr stabilen Werkstoffen bestehen, sondern aus Holz, Kunststoff o.ä., würde der Spannkörper mit seinen beiden Stäben das Fassadenelement in seiner Einstecköffnung auseinanderdrücken und möglicherweise zerstören. Durch Einsetzen der starren Klemmhülse in die Einstecköffnung kann der Spannkörper auch bei Fassadenelementen aus Werkstoffen verwendet werden, die leicht dehnbar oder zerstörbar sind.

Gemäß einer bevorzugten Ausgestaltung besteht das Fassadenelement aus Keramik. Keramik eignet sich besonders als Fassadenelement-Werkstoff, da es in hohem Maße witterungsbeständig ist und einen geringen Wärmeausdehnungskoeffizienten aufweist. Durch die geringe Wärmeausdehnung werden enge Fugenmaße zwischen aneinander angrenzenden Fassadenelementen bzw. zwischen dem Fassadenelement und dem Tragelement möglich. Keramik bietet ferner eine Vielzahl von Gestaltungsmöglichkeiten.

Vorzugsweise ist die Einstecköffnung und der Spannkörper im Querschnitt im wesentlichen rechteckig oder im wesentlichen kreisrund ausgebildet.

Im folgenden werden unter Bezugnahme auf die Zeichnungen mehrere Ausführungsbeispiele der Erfindung näher erläutert.

Es zeigen:
- Fig. 1: eine Gebäudefront mit einem Tragelement und mehreren Fassadenelementen, die durch eine Verbindungsvorrichtung an dem Tragelement befestigt sind,

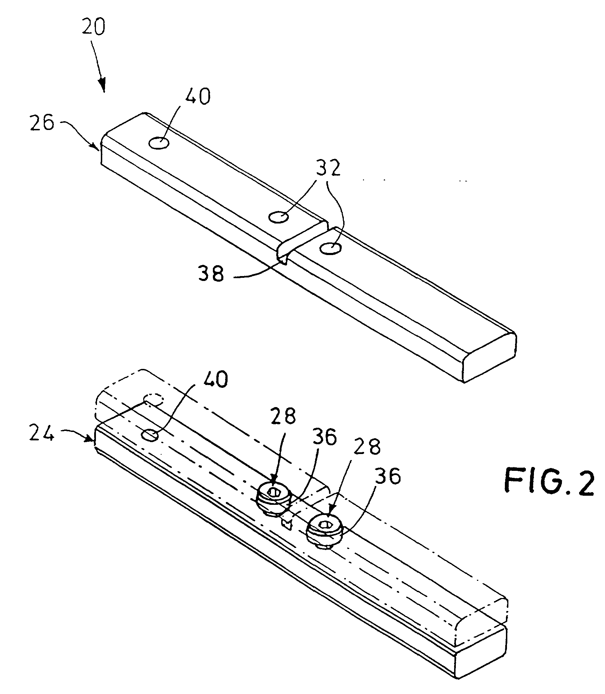

- Fig. 2: eine aus zwei Stäben bestehende Verbindungsvorrichtung der Fig. 1,
- Fig. 3: einen Längsschnitt III-III der Fassadenelemente, des Tragelementes und des Spannkörpers der Fig. 1 mit Einstecköffnungen gleicher Größe,
- Fig. 4: einen Längsschnitt gemäß Fig. 3 mit einer Tragelement-Einstecköffnung, die größer als die Fassadenelement-Einstecköffnung ist,
- Fig. 5: die Situation der Fig. 3 mit einer Tragelement-Einstecköffnung, die kleiner als die Fassadenelement-Einstecköffnung ist,
- Fig. 6: einen vertikalen Längsschnitt durch ein Tragelement und ein erstes Fassadenelement beim Einführen eines Spannkörpers,
- Fig. 7: einen vertikalen Längsschnitt gemäß Fig. 6 bei der Montage eines zweiten Fassadenelementes und dem Herausziehen des Spannkörpers aus dem ersten Fassadenelement,
- Fig. 8: eine zweite Ausführungsform eines Fassadenelementes mit kreisrunder Einstecköffnung und kreisrundem Spannkörper und
- Fig. 9: ein drittes Ausführungsbeispiel eines Fassadenelementes aus Holz mit in die Einstecköffnung eingesetzter Klemmhülse.

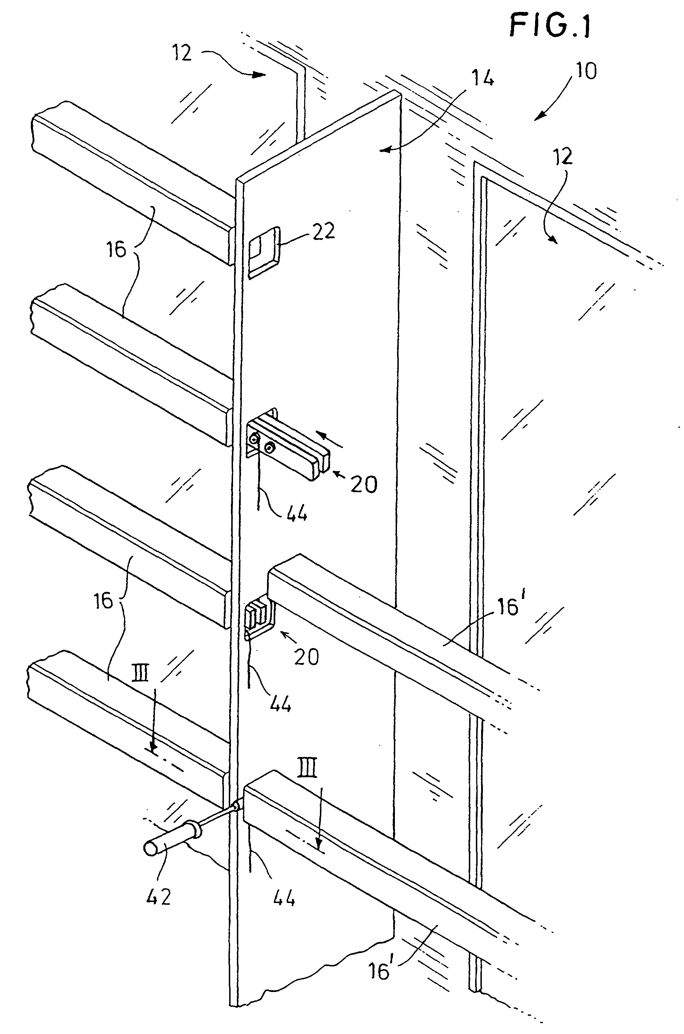

In Fig. 1 ist eine vertikale Außenwand 10 eines Gebäudes dargestellt, in der zwei Fenster 12 angeordnet sind. Zwischen den beiden Fenstern 12 ist als Tragelement eine Trägerplatte 14 an der Außenwand 10 befestigt, die senkrecht nach außen von der Außenwand 10 absteht. Von der Trägerplatte 14 und weiteren, nicht dargestellten, Trägerplatten, die an den anderen Seiten der Fenster 12 angeordnet sind, werden rechteckige, rohrartig ausgebildete Fassadenelemente 16,16' gehalten.

Alternativ kann das Tragelement auch eine vertikale Geländerstütze sein, an der als rohrartige Handläufe bzw. Querstreben ausgebildete Fassadenelemente gehalten werden.

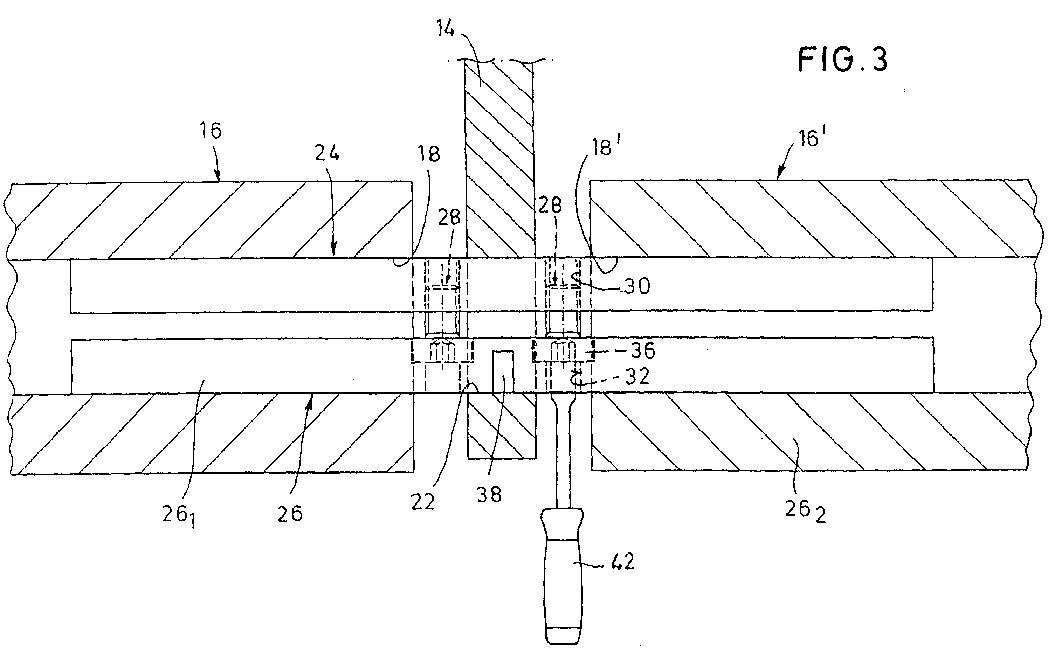

Die Befestigung der Fassadenelemente 16,16' an der Trägerplatte 14 erfolgt im wesentlichen durch einen eine Verbindungsvorrichtung bildenden Spannkörper 20, wie insbesondere in den Fign. 3-5 dargestellt. Der Spannkörper 20 ist horizontal liegend mit seinen beiden Endbereichen jeweils in einer Einstecköffnung 18,18' der einander gegenüberliegenden Längsenden der horizontal angeordneten langgestreckten Fassadenelemente 16,16' eingesteckt. Der Mittelbereich des Spannkörpers 20 lagert in einer Einstecköffnung 22 der Trägerplatte 14. Der Spannkörper 20 besteht jeweils aus einem ersten Stab 24 und einem zweiten Stab 26. Beide Stäbe 24,26 bestehen aus Edelstahl und sind in ihren Außenmaßen identisch. Die Stäbe 24,26 können auch aus Aluminium oder Kunststoff bestehen. Beide Stäbe 24,26 haben einen rechteckigen Querschnitt und ergeben spaltfrei aufeinandergelegt einen Spannkörper 20 mit ungefähr quadratischem Querschnitt. Der erste Stab 24 weist in seinem mittleren Bereich als Spreizelemente zwei Gewindeschrauben 28 auf, die jeweils in eine Gewindebohrung 30 des ersten Stabes 24 eingeschraubt sind.

Den Gewindebohrungen 30 genau gegenüberliegend und mit ihnen fluchtend sind in dem zweiten Stab 26 zwei Zugriffsbohrungen 32 vorgesehen, die jeweils in der dem ersten Stab 24 zugewandten Seite eine Ausnehmung 34 zur Aufnahme des Schraubenkopfes 36 der Gewindeschraube 28 aufweisen. Der Schraubenkopf 36 ist ein Zylinderkopf zum Ansetzen eines entsprechenden Schraubendrehers. Der Schraubenkopf kann einen Innensechskant, einen Schlitz- oder Kreuzschlitz aufweisen. Der zweite Stab 26 weist in der Stabmitte in Querrichtung als Gelenkstelle eine Biegenut 38 auf, die einen Biegebereich des zweiten Stabes 26 bildet und diesen in zwei Stabhälften 26₁ und 26₂ unterteilt. Durch die Biegenut 38 wird der zweite Stab 26 in zwei lediglich gelenkig miteinander verbundene Teilstäbe 26₁, 26₂ unterteilt, die sich auch relativ unabhängig voneinander durch die Gewindeschrauben 28 an ihre jeweilige Situation anpassen und einstellen lassen. Alternativ oder ergänzend zu der Biegenut kann der zweite Stab auch dünner als der erste Stab ausgebildet sein, so dass er über seine gesamte Länge biegsam ist.

Ferner weisen beide Stäbe 24,26 jeweils eine Halteteilöffnung 40 auf, in die zum Zusammenhalten der beiden Stäbe 24,26 vor der Montage ein Kunststoffhaltestift einsteckbar ist. Als Halteteil kann jedoch auch eine leicht zu lösende Verklebung der beiden Stäbe 24,26 miteinander oder ein um die beiden Stäbe gewickeltes Klebeband dienen. Das Halteteil dient dazu, die beiden Stäbe 24,26 bis zur Montage zusammenzuhalten, damit die Handhabung des Spannkörpers möglichst einfach ist.

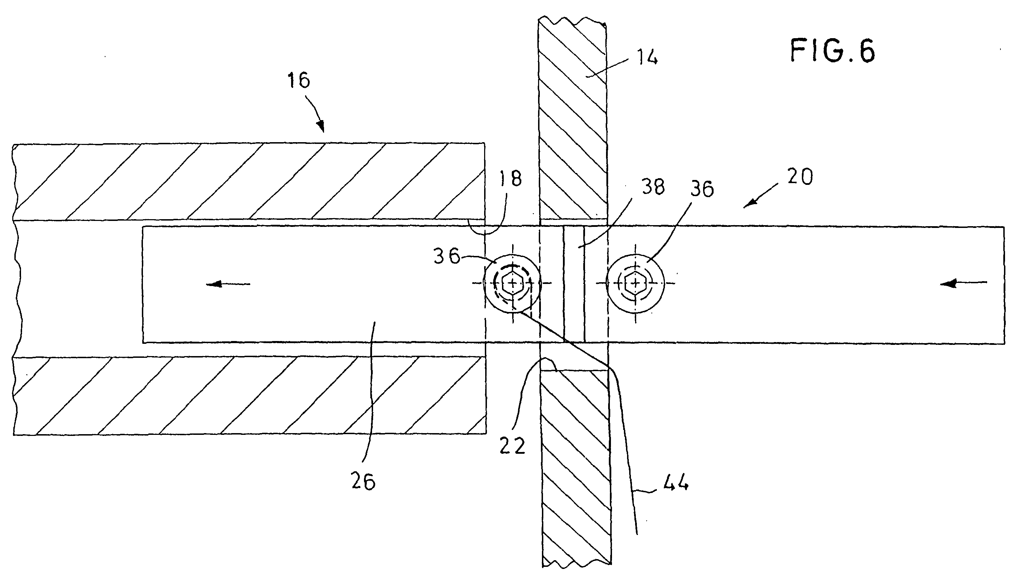

Die Montage von Fassadenelementen 16,16' an einem Tragelement 14 an einer Gebäudeaußenwand 10 ist insbesondere in den Fign. 1 und 3-7 dargestellt. Zur Befestigung eines bereits an einem Ende montierten Fassadenelementes 16 wird zunächst ein Spannkörper 20 durch die Einstecköffnung 22 der Trägerplatte 14 in die Einstecköffnung 18 mit seiner gesamten Länge eingeschoben, so dass es nicht mehr aus der Einstecköffnung 22 der Trägerplatte 14 herausragt. Dabei wird der Holezug 44 durch den Spannkörper 20 mitgenommen, wobei das freie Ende des Holezuges 44 aus der Einstecköffnung 22 der Trägerplatte 14 heraushängt. Die beide Stäbe 24,26 stehen vertikal, so dass der Schraubenkopf 32 von vorne aus durch die Zugriffsbohrungen 32 zugänglich und bedienbar ist. Die beiden Stäbe können jedoch auch horizontal liegen, so dass der Schraubenkopf von unten oder oben aus zugänglich ist.

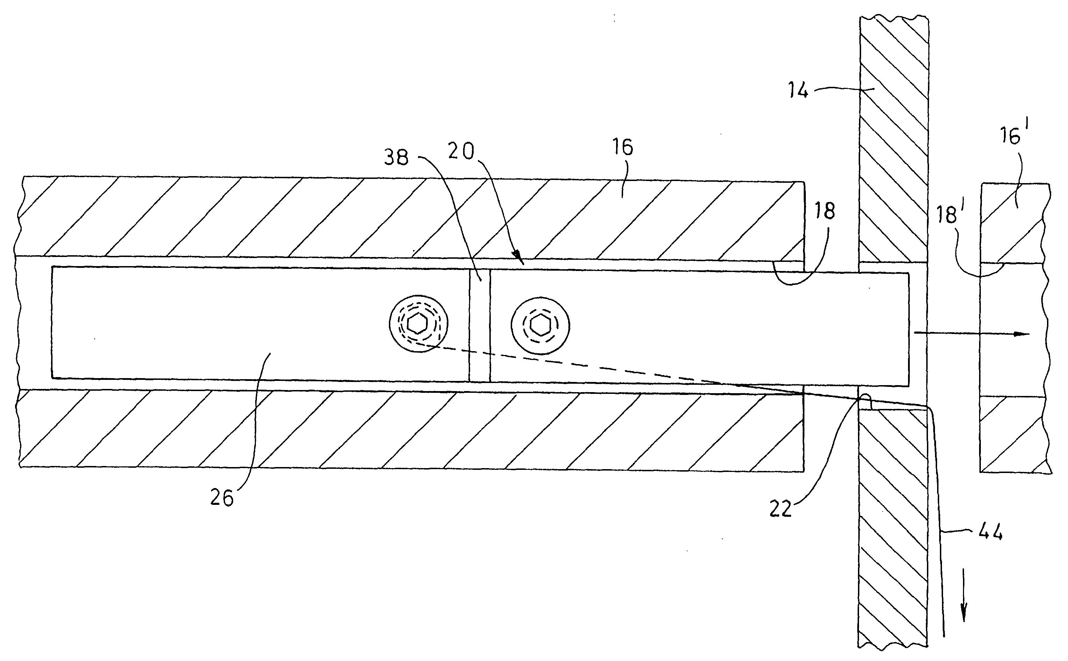

Anschließend wird das nächste Fassadenelement 16' mit seiner Einstecköffnung 18' derart in Position gebracht, dass seine Einstecköffnung 18' mit den beiden übrigen Einstecköffnungen 22,18 fluchtet, wie in Fig. 7 dargestellt.

Dann wird das freie Ende des Holezuges 44 gezogen, wodurch der Spannkörper 20 in seine Endposition gezogen wird, so dass seine beiden Endbereiche jeweils zu gleichen Teilen in die Eintecköffnungen 18,18' der Fassadenelemente 16,16' eingreifen und sein Mittelbereich einschließlich der Biegenut 38 in der Einstecköffnung 22 der Trägerplatte 14 liegt. In dieser Position werden die beiden Gewindeschrauben 28 durch Linksdrehen aus den Gewindebohrungen 30 herausgeschraubt, bis die beiden Stäbe 24,26 in den drei Einstecköffnungen 18,22,18' verspannt sind, wie in Fig. 3 dargestellt. Durch das Herausschrauben der Gewindeschrauben 28 wird auch der Holefaden 44 aus seiner Klemmung gelöst und kann entfernt werden.

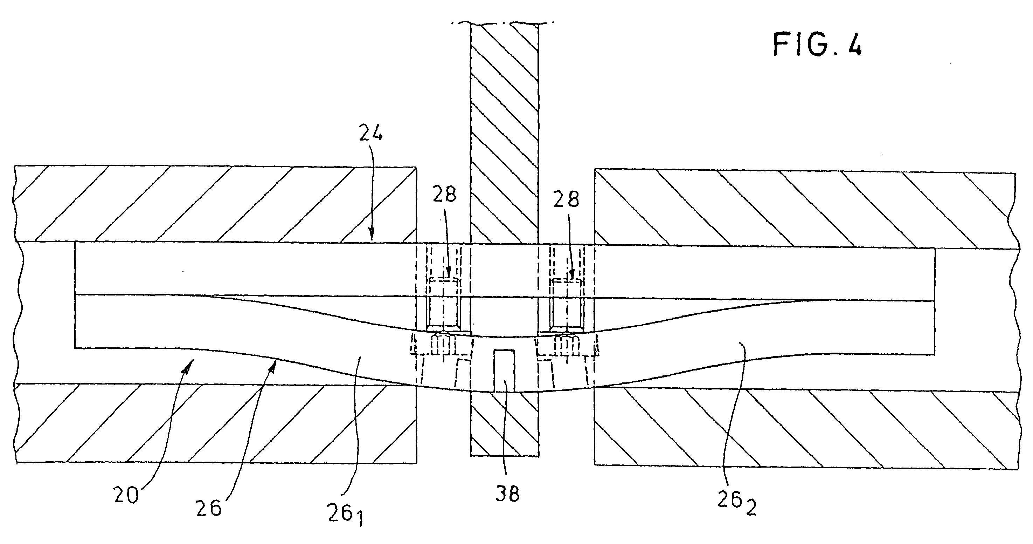

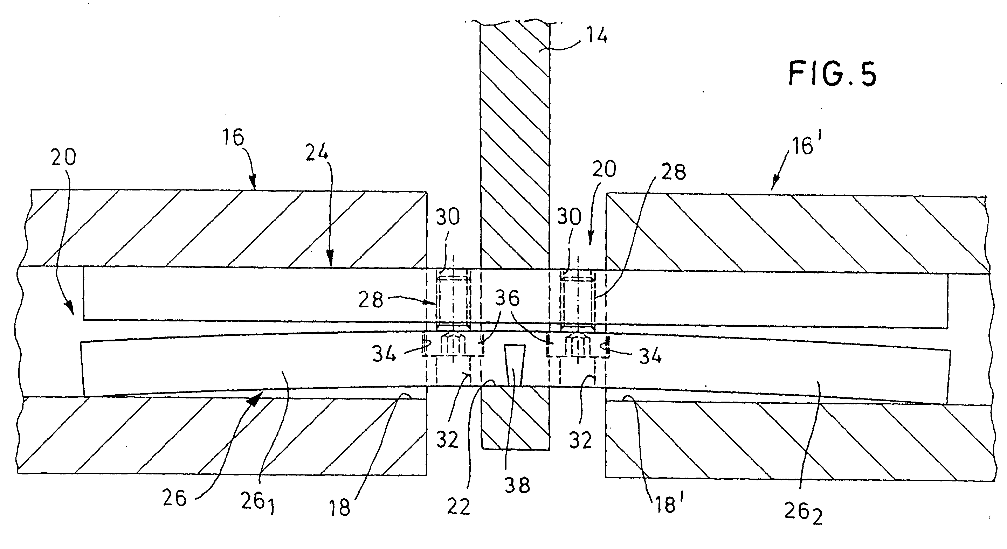

In Fig. 3 ist die in der Praxis selten anzutreffende Situation dargestellt, dass die Breiten der Einstecköffnungen 18,22,18' der Fassadenelemente 16,16' und der Trägerplatte 14 exakt gleich groß sind. In der Praxis sind jedoch gewisse Abweichungen der Innenmaße voneinander unvermeidlich, wie in den Fign. 4 und 5 dargestellt. Während die Breite der Einstecköffnungen 18,18' der Fassadenelemente 16,16' relativ exakt und gleichbleibend ist, kann die Breite der Einstecköffnung 22 der Trägerplatte 14 recht verschieden ausfallen. In Fig. 4 ist der Fall dargestellt, dass die Breite der Einstecköffnung 22 der Trägerplatte 14 größer ausfällt als die Breite der Einstecköffnungen 18,18' der Fassadenelemente 16,16'. In diesem Fall wird beim Herausschrauben der Gewindeschrauben 28 der zweite Stab 26 im Bereich der Biegenut 38 verbogen, so dass der Stab 26 sich an diese Situation gut anpassen kann. Durch die Biegenut 38 wird ein Gelenk gebildet, das den zweiten Stab 26 in zwei Teilstäbe 26₁,26₂ unterteilt und gelenkig miteinander verbindet. Die beiden Teilstäbe 26₁,26₂ können sich daher jeweils so in die Einstecköffnungen legen, dass eine optimale Fixierung des jeweiligen Fassadenelementes 16,16' mit der Trägerplatte 14 realisiert wird. Wie Versuche ergeben haben, treten durch die Gelenkigkeit des zweiten Stabes 26 keine hohen punktuellen Belastungen des Fassadenelementes 16 auf, so dass dieses nicht beschädigt wird. Zugleich wird eine gute Verklemmung der Fassadenelemente 16,16' mit der Trägerplatte 14 erreicht, wobei dennoch leichte Längsausdehnungen der Fassadenelemente 16,16' möglich sind.

In Fig. 5 ist eine Situation mit einer Trägerplatten-Einstecköffnung 22 dargestellt, die kleiner als die Fassadenelement-Einstecköffnungen 18,18' ist. Auch bei dieser Situation wirkt die Biegenut 38 als gelenkige Verbindung der beiden Teilstäbe 26₁,26₂ und erlaubt eine Anpassung jedes Teilstabes 26₁,26₂ an die abweichenden Breiten der Einstecköffnungen 22,18,18'.

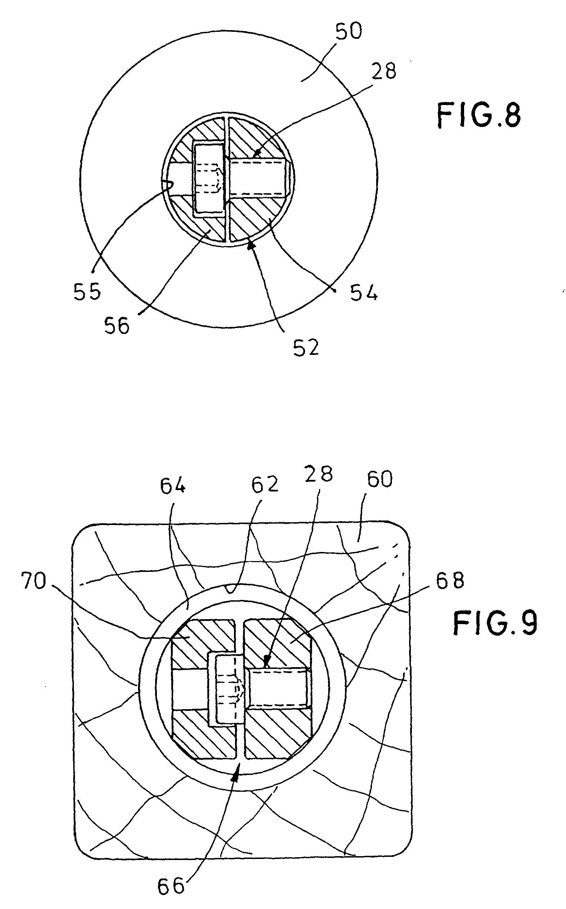

In Fig. 8 ist ein zweites Ausführungsbeispiel eines Fassadenelementes 50 mit einem im Querschnitt insgesamt kreisförmigen Spannkörper 52 dargestellt, der aus zwei etwa halbkreisförmigen Stäben 54,56 besteht. Die Einstecköffnung 55 ist ebenfalls kreisförmig ausgebildet.

In Fig. 9 ist ein Fassadenelement 60 aus Holz dargestellt, in dessen kreisrunde Ausnehmung 62 eine Metall-Klemmhülse 64 eingesetzt ist, die klemmend in der Ausnehmung 62 sitzt. In die Klemmhülse 64 ist ein Spannkörper 66 eingeschoben, der aus einem ersten Stab 68 und einem zweiten Stab 70 besteht. Die Längskanten der Stäbe 68,70 sind mit 45° abgeschrägt ausgebildet. Durch Vorsehen einer Klemmhülse 64 können für Fassadenelemente auch Werkstoffe wie Holz, Kunststoff u.ä. benutzt werden, die ohne die Klemmhülse durch den Spannkörper zu sehr deformiert bzw. zerstört werden würden.

Zur Befestigung eines Fassadenelementes an einer Trägerplatte kann auch ein Spannkörper verwendet werden, der nur eine einzige Gewindeschraube als Spreizelement aufweist.

Die Eindringtiefe des Spannkörpers in eine Einstecköffnung 22,22' eines Fassadenelementes 16,16' sollte mindestens 50 mm betragen. Die Abweichungen der Öffnungsbreiten, der Trägerplatte und der Spannkörper 20 sollte nicht mehr als 1 mm betragen.

## Patentansprüche

1. Gebäudefassade mit zwei Fassadenelementen (16,16'), einem gebäudeseitigen Tragelement (14) und einer Verbindungsvorrichtung zur Befestigung der Fassadenelemente (16,16') an dem Tragelement (14), wobei
die Verbindungsvorrichtung einen Spannkörper (20) aufweist, der in Einstecköffnungen (18,18') der Fassadenelemente (16,16') und in einer durchgehenden Einstecköffnung (22) des Tragelementes (14) steckt,
der Spannkörper (20) zwei parallele Stäbe (24,26) und zwei Spreizelemente (28) zwischen den Stäben (24,26) aufweist und die Spreizelemente (28) betätigbar sind, um die beiden Stäbe (24,26) auseinanderzudrücken und in den Einstecköffnungen (18,18',22) zu verspannen,
der Spannkörper (20) mit seinem mittleren Bereich zwischen den beiden Spreizelementen (28) in die Einstecköffnung (22) des Tragelementes (14) und mit seinen beiden Endbereichen seitlich der Spreizelemente (28) in die Einstecköffnungen (18,18') des jeweiligen Fassadenelements (16,16') eingesteckt und dort verspannbar ist, und
die Spreizelemente (28) derart angeordnet sind, dass sie jeweils durch einen Spalt zwischen dem Fassadenelement (16,16') und dem Tragelement (14) betätigbar sind.

2. Gebäudefassade nach Anspruch 1, **dadurch gekennzeichnet,**
**dass** die Spreizelemente jeweils von einer Gewindeschraube (28) in einer Gewindebohrung (30) des einen Stabes (24) gebildet werden, wobei die Stäbe (24,26) durch Herausschrauben der Gewindeschraube (28) auseinander gespreizt werden, und
**dass** der andere Stab (26) jeweils eine durchgehende Zugriffsbohrung (32) aufweist, mit der die Gewindebohrung (30) des einen Stabes (24) fluchtet und durch die die Gewindeschraube (28) betätigbar ist.

3. Gebäudefassade nach Anspruch 1 oder 2, **dadurch gekennzeichnet, dass** ein Stab (26) zwischen den beiden Spreizelementen (28) eine Gelenkstelle (38) aufweist.

4. Gebäudefassade nach Anspruch 3, **dadurch gekennzeichnet, dass** die Gelenkstelle als Biegenut (38) ausgebildet ist.

5. Gebäudefassade nach einem der Ansprüche 2-4, **dadurch gekennzeichnet, dass** die Zugriffsbohrung (32) eine Ausnehmung (34) zur Aufnahme eines Kopfes (36) der Gewindeschraube (28) aufweist.

6. Gebäudefassade nach einem der Ansprüche 1-5, **dadurch gekennzeichnet, dass** der Spannkörper (20) einen Holezug (44) zum Herausziehen des Spannkörpers (20) aus einer Einstecköffnung (18) bei der Montage aufweist.

7. Gebäudefassade nach Anspruch 6, **dadurch gekennzeichnet, dass** der Holezug (44) von der Gewindeschraube (28) an dem einen Stab (24) festgeklemmt ist und beim Herausschrauben der Gewindeschraube (28) gelöst wird.

8. Gebäudefassade nach einem der Ansprüche 1-7, **dadurch gekennzeichnet, dass** der Spannkörper (20) ein lösbares Halteteil aufweist, das die beiden Stäbe (24,26) lösbar zusammenhält.

9. Gebäudefassade nach Anspruch 8, **dadurch gekennzeichnet, dass** die Fassadenelemente (16,16') jeweils eine in Längsrichtung durchgehende Einstecköffnung (18,18') aufweisen.

10. Gebäudefassade nach Anspruch 8 oder 9, **dadurch gekennzeichnet, dass** die Fassadenelemente (60) in ihrer Einstecköffnung (62) eine starre Klemmhülse (64) aufweisen, in die der Spannkörper (66) eingespannt ist.

11. Gebäudefassade nach einem der Ansprüche 8-10, **dadurch gekennzeichnet, dass** die Fassadenelemente (16,16') aus Keramik bestehen.

12. Gebäudefassade nach einem der Ansprüche 8-11, **dadurch gekennzeichnet, dass** die Einstecköffnung (16,16') und der Spannkörper (20) im Querschnitt im wesentlichen rechteckig ausgebildet sind.

13. Gebäudefassade nach einem der Ansprüche 8-11, **dadurch gekennzeichnet, dass** die Einstecköffnung (55) und der Spannkörper (52) im Querschnitt im wesentlichen kreisrund ausgebildet sind.

## Claims

1. A building façade comprising two façade elements (16, 16'), a supporting element (14) on the side of the building, and a connecting device for fastening the façade elements (16, 16') to the supporting element (14), wherein
the connecting device comprises a tensioning member (20) inserted into insertion openings (18, 18') of the façade elements (16, 16') and in a throughgoing insertion opening (22) of the supporting element (14),
the tensioning member (20) comprises two parallel rods (24, 26) and two spreader elements (28) between the rods (24, 26) and the spreader elements (28) are operable to push the two rods (24, 26) apart and to spread them in the insertion openings (18, 18', 22),
the tensioning member (20) has its middle portion between the two spreader elements (28) inserted into the insertion opening (22) of the supporting element (14) and has its two end portions lateral of the spreader elements (28) inserted into the insertion openings (18, 18') of the respective façade element (16, 16'), where it can be spread, and
the spreader elements (28) arranged such that they are each operable through a gap between the façade element (16, 16') and the supporting element (14).

2. The building façade of claim 1, **characterized in that**
the spreader elements are each formed by a threaded screw (28) in a threaded bore (30) of one rod (24), the rods (24, 26) being spread apart by screwing out the threaded screw (28), and
the other rod (26) respectively comprising an access bore (32) with which the threaded bore (30) of the one rod (24) is aligned and through which the threaded screw (28) is operable.

3. The building façade of claim 1 or 2, **characterized in that** one rod (26) has a pivot point (38) between the two spreader elements (28).

4. The building façade of claim 3, **characterized in that** the pivot point is formed as a bending groove (38).

5. The building façade of one of claims 2 - 4, **characterized in that** the access bore (32) has a recess (34) for receiving the head (36) of the threaded screw (28).

6. The building façade of one of claims 1-5, **characterized in that** the tensioning member (20) comprises a pulling cable (44) for pulling out the tensioning member (20) from an insertion opening (18) during mounting.

7. The building façade of claim 6, **characterized in that** the pulling cable (44) is clamped by the threaded screw (28) at the one rod (24) and is released when the threaded screw (28) is screwed out.

8. The building façade of one of claims 1-7, **characterized in that** the tensioning member (20) comprises a detachable holding member detachably holding the two rods (24, 26) together.

9. The building façade of claim 8, wherein the façade elements (16, 16') each have an insertion opening (18, 18') extending therethrough in the longitudinal direction.

10. The building façade of claim 8 or 9, **characterized in that** the façade elements (60) have a rigid clamping sleeve (64) in their insertion opening (62), in which the tensioning member (66) is clamped.

11. The building façade of one of claims 8 - 10, **characterized in that** the façade elements (16, 16') are made of ceramics.

12. The building façade of one of claims 8-11, **characterized in that** the insertion opening (16, 16') and the tensioning member (20) are substantially rectangular in cross section.

13. The building façade of one of claims 8 - 11, **characterized in that** the insertion opening (55) and the tensioning member (52) are substantially circular in cross section.

## Revendications

1. Façade de bâtiment comprenant deux éléments de façade (16,16'), un élément porteur côté bâtiment (14) et un dispositif de connexion permettant de fixer les éléments de façade (16,16') à l'élément porteur (14), dans lequel,
le dispositif de connexion comporte un élément de tension (20) qui est fiché dans des ouvertures d'introduction (18,18') des éléments de façade (16,16') et dans une ouverture d'introduction traversante (22) de l'élément porteur (14),
l'élément de tension (20) comporte deux barres parallèles (24,26) et deux éléments d'écartement (28) entre les barres (24,26) et les éléments d'écartement (28) sont actionnables, pour pousser les deux barres (24,26) à l'écart l'une de l'autre et les caler dans les ouvertures d'introduction (18,18', 22),
l'élément de tension (20) est introduit par sa zone centrale située entre les deux éléments d'écartement (28) dans l'ouverture d'introduction (22) de l'élément porteur (14) et par ses deux zones d'extrémité situées de part et d'autre des éléments d'écartement (28) dans les ouvertures d'introduction (18,18') de l'élément de façade respectif (16,16') et peut y être calé, et
les éléments d'écartement (28) sont disposés de telle manière qu'ils peuvent être actionnés respectivement à travers une fente située entre l'élément de façade (16,16') et l'élément porteur (14).

2. Façade de bâtiment selon la revendication 1, **caractérisée en ce que**,
les éléments d'écartement sont formés respectivement par une vis filetée (28) dans un taraudage (30) d'une première desdites barres (24), les barres (24,26) étant écartées l'une de l'autre par dévissage de la vis filetée (28), et
l'autre desdites barres (26) comportant respectivement un trou d'accès traversant (32), avec lequel le taraudage (30) de ladite première barre (24) s'aligne et à travers lequel la vis filetée (28) peut être actionnée.

3. Façade de bâtiment selon la revendication 1 ou 2, **caractérisée en ce qu'**une barre (26) comporte un point articulé (38) situé entre les deux éléments d'écartement (28).

4. Façade de bâtiment selon la revendication 3, **caractérisée en ce que** le point articulé est réalisé sous forme de rainure de pliage (38).

5. Façade de bâtiment selon l'une quelconque des revendications 2 à 4, **caractérisée en ce que** le trou d'accès (32) comporte un évidement (34) pour recevoir une tête (36) de la vis filetée (28).

6. Façade de bâtiment selon l'une quelconque des revendications 1 à 5, **caractérisée en ce que** l'élément de tension (20) comporte une poignée d'éjection (44) pour retirer l'élément de tension (20) d'une ouverture d'introduction (18) lors du montage.

7. Façade de bâtiment selon la revendication 6, **caractérisée en ce que** la poignée d'éjection (44) est bloquée sur ladite première barre (24) par la vis filetée (28) et est libérée lors du dévissage de la vis filetée (28).

8. Façade de bâtiment selon l'une quelconque des revendications 1 à 7, **caractérisée en ce que** l'élément de tension (20) comporte une butée amovible qui maintient les deux barres (24,26) ensemble de façon amovible.

9. Façade de bâtiment selon la revendication 8, **caractérisée en ce que** les éléments de façade (16,16') comportent respectivement une ouverture d'introduction traversante dans le sens de la longueur (18,18 ').

10. Façade de bâtiment selon la revendication 8 ou 9, **caractérisée en ce que** les éléments de façade (60) comportent dans leur ouverture d'introduction (62) une douille de serrage rigide (64), dans laquelle l'élément de tension (66) est encastré par serrage.

11. Façade de bâtiment selon l'une quelconque des revendications 8 à 10, **caractérisée en ce que** les éléments de façade (16,16') se composent de céramique.

12. Façade de bâtiment selon l'une quelconque des revendications 8 à 11, **caractérisée en ce que** l'ouverture d'introduction (16,16') et l'élément de tension (20) présentant une section transversale sensiblement rectangulaire.

13. Façade de bâtiment selon l'une quelconque des revendications 8 à 11, **caractérisée en ce que** l'ouverture d'introduction (55) et l'élément de tension (52) présentant une section transversale sensiblement circulaire.
